# EUROPÄISCHE PATENTSCHRIFT

(11) **EP 0 154 768 B1**
(45) Veröffentlichungstag und Bekanntmachung des Hinweises auf die Patenterteilung: **25.05.1988**
(21) Anmeldenummer: 85100113.1
(22) Anmeldetag: 07.01.1985
(51) Int. Cl.: C08G 18/10, C08G 18/32, C09J 3/16, D06N 3/14, C14C 11/00

(54) **Verfahren zur Herstellung von Polyurethanen, Polyurethane mit aromatischen Aminoendgruppen und ihre Verwendung**
Process for the preparation of polyurethanes, polyurethanes having aromatic amino terminal groups and their use
Procédé de préparation de polyuréthanes, polyuréthanes ayant des groupes amino terminaux aromatiques et leur utilisation

(30) Priorität: 19.01.1984 DE 3401753
(43) Veröffentlichungstag der Anmeldung: 18.09.1985
(73) Patentinhaber: BAYER AG, 51368 Leverkusen (DE)
(72) Erfinder: Meckel, Walter, Dr., D-4040 Neuss (DE)

(56) Entgegenhaltungen:
- EP-A- 0 077 989
- EP-A- 0 104 396
- EP-A- 0 105 146
- DE-B- 1 122 254
- DE-B- 1 252 892
- FR-A- 1 314 686
- FR-A- 2 029 098
- US-A- 3 428 610

## Beschreibung

Es wird ein Verfahren zur Herstellung von vernetzungsfähigen, überwiegend linearen Polyurethanen mit H-aktiven, gegenüber NCO reaktiven Endgruppen, aus Polyisocyanaten, höhermolekularen Polyhydroxylverbindungen und/oder im wesentlichen difunktionellen Kettenverlängerungsmitteln und Kettenabbruchsmitteln in Lösungsmitteln unter ein- oder mehrstufiger Reaktionsführung, dadurch gekennzeichnet, daß man zunächst ein noch endständige NCO-Gruppen aufweisendes Polyurethan mit einem Molekulargewicht von mindestens 10000 aufbaut und anschließend als Kettenabbruchsmittel unterschiedlich reaktive Diamine, ausgewählt aus der Reihe von araliphatischen Diaminen und/oder aromatischen Diaminen mit unterschiedlich reaktiven Aminogruppen in einem NCO/NH-Verhältnis von 1 : 5 bis 1 : 1,6⁶ unter Bildung von Polyurethanen mit endständigen aromatischen Aminogruppen umsetzt, beansprucht.

Gegenstand der Erfindung sind ferner die nach dem Verfahren zugängigen Polyurethane mit einem Gehalt an endständigen aromatischen Aminogrupen von ≤ 0,2 Äquivalenten endständiges aromatisches NH₂ pro 1 000 g Polyurethan und einer Untergrenze von mindestens 0,001 Äquivalenten. Weiterer Erfindungsgegenstand ist die Verwendung der genannten Polyurethane in Zweikomponenten-Polyurethansystemen unter Zusatz von mehr als difunktionellen Polyisocyanaten zur Herstellung leicht vernetzender Klebstoffe und Beschichtungen auf Textilien und Leder.

Die Herstellung von hochmolekularen Polyurethanen in Lösung ist seit langem bekannt und die Produkte haben sich aufgrund ihrer ausgezeichneten Eigenschaften auf dem Klebstoff, Beschichtungs und Lackgebiet einen bedeutenden Markt erobert.

Die rationelle Herstellung solcher Polyurethanlösung wird in vielfacher Abwandlung und in vielen Patenten, z.B. DE-A 2500921, beschrieben, wobei zur Erzielung lagerstabiler Lösungen auf einem möglichst rationellen Produktionsverfahren die verschiedensten Wege eingeschlagen werden. Allen Veröffentlichungen liegt die Problematik zugrunde, Isocyanatüberschüsse in der fertigen Lösung unter unkontrollierbarer Veränderung der Lösung zu vermeiden, andererseits aber gezielt und rasch eine gewünschte Höhe der Lösungsviskosität der Polyurethane einzustellen, wie sie für die Anwendung der Polyurethane gefordert wird.

Wenn man ein Gemisch von H-reaktiven Verbindungen (Zerewitinoff-aktiven Verbindungen) mit gegenüber NCO reaktiven Gruppen, stufenweise mit Polyisocyanaten bis zur gewünschten Viskosität, jedoch unter Vermeidung von Isocyanatüberschüssen, umsetzt, erhält man zwar lagerstabile PUR-Lösungen. Das Verfahren ist jedoch für den Produktionsbereich wegen der langen Reaktionszeiten. insbesondere bei Verwendung von Polyolen, gegen Ende der Reaktion wenig interessant. Weniger zeitaufwendig und daher für eine rationellere Fertigung brauchbar, ist ein Verfahren, das geringe Isocyanatüberschüsse beinhaltet, die bei Erreichen der gewünschten Viskosität mit einem Überschuß an Diolen, Alkanolaminen (GB-A 13 51 773), Alkanolaminen und anschließend Epoxiden (DE-A 25 01 987), Monoalkoholen (CA-A 888 781), Monoaminen (DE-A 19 06 555) oder Monooximen (DE-A 31 42 706) zur Reaktion gebracht werden, um lagerstabile Lösungen zu erhalten. Bei Verwendung von Aminen müssen allerdings die evtl. überschüssigen Aminogruppen abreagiert werden, z. B. mit Monoisocyanaten entsprechend DE-A2502921, da andernfalls instabile Lösungen entstehen. Derartige Polyurethanprodukte werden aus Lösung zur Beschichtung durch Auftrocknung oder durch Koagulation eingesetzt. (Sogenannte Einkomponentenpolyurethane).

Werden jedoch besondere Eigenschaften wie Lösungsmittelfestigkeit, Oberflächenhärte oder Temperaturbeständigkeit gewünscht, so werden den Polyurethanlösungen vor der Applikation Vernetzer zugegeben, beispielsweise Polyisocyanate, die erst auf dem Substrat ein vernetztes Polyurethan mit den gewünschten Eigenschaften erzeugen. Nachteilig bei dieser Vorgehensweise ist, daß bestimmte in der Praxis oft schlecht einzuhaltende Bedingungen erfüllt sein müssen, um optimale Eigenschaften, welche aus hoher Vernetzung resultieren, zu erzielen. Eine wesentliche Bedingung ist beispielsweise die Einhaltung niedriger Feuchtigkeitsmengen in den PU-Lösungen, was unter Umständen eine aufwendige Trocknung der verwendeten Lösungsmittel und der oftmals Wasser adsorptiv enthaltenden Zuschläge wie Pigmente etc, notwendig macht oder den Zusatz von Trockenmitteln erfordert, die unter Umständen auch einen nachteiligen Einfluß ausüben können. Die Mischung von Polyurethanlösungen und den Polyisocyanatvernetzern muß auch hinreichend lagerstabil, bzw. während der Verarbeitungsphase stabil sein. Daher sind solche Polyurethanlösungen, wie sie durch Umsetzung von NCO-Prepolymeren mit überschüssigen Mengen an aliphatischen Diaminen, Hydrazin oder Polyhydrazid-Verbindungen, z. B. nach DE-C 1 157 386 entstehen, für die beabsichtigte Vernetzungsanwendung nicht geeignet, da sie beim Versetzen mit Polyisocyanaten praktisch augenblicklich reagieren. Es wurde auch schon vorgeschlagen, Kettenabbruchmittel wie Aminoalkohole oder Diolamine einzusetzen. Derartige Verbindungen, wie Aminoalkohole reagieren zwar schnell mit ihrer primären oder sekundären (aliphatischen) Aminogruppe, doch sind die verbleibenden Hydroxylgruppen aus der Abbruchsreaktion wieder sehr wenig reaktiv und erfordern erhöhte Vernetzungstemperaturen und/oder erhöhte Vernetzermengen und führen oft zu unzureichend vernetzten Produkten, da dann Nebenreaktionen der NCO-Gruppen, z. B. mit Wasser. bestimmenden Einfluß bekommen können.

Aufgabe der Erfindung ist es daher, geeignete Polyurethanlösungen bereitzustellen, welche die oben

erwähnten Nachteile nicht aufweisen, insbesondere mit Polyisocyanaten auch bei hohen Feuchtigkeitsgehalten der Lösung sicher vernetzende Polyurethane ergeben. Die Vernetzungsreaktion soll insbesondere auch bereits bei Raumtemperatur oder relativ niedrigen Vernetzungstemperaturen leicht ablaufen. insbesondere in den lösemittelfreien Polyurethan-/Polyisocyanatvernetzergemischen. Weitere Vorteile der Erfindung ergeben sich in der folgenden Diskussion in der Beschreibung bzw. aus den Ergebnissen der Beispiele.

Die wesentliche Verbesserung zur Herstellsung leicht vernetzungsfähiger Polyurethane ergibt sich daraus, daß zunächst der Aufbau der Polyurethane auf der Basis von üblichen Ausgangsstoffen vorgenommen wird, daß aber erst in einem relativ hochmolekularen Reaktionszustand eine Kettenabbruchsreaktion mit bestimmten Diaminen ohne wesenltiche Molekulargewichtserhöhung erfolgt, wodurch aromatische Aminoendgruppen in die Polyurethane eingeführt werden, an denen dann weitere Vernetzungsreaktionen leicht und sicher ablaufen können. Die erfindungsgemäßen Polyurethane enthalten bestimmte Mengen an (mit dem Polymeren verbundenen) aromatischen Aminoendgruppen.

Gegenstand der vorliegenden Erfindung ist somit ein Verfahren zur Herstellung von vernetzungsfähigen, überwiegend linearen Polyurethanen mit gegenüber NCO reaktiven Endgruppen, aus
A) organischen, im wesentlichen difunktionellen Polyisocyanaten,
B) höhermolekularen, im wesentlichen difunktionellen Polyhydroxylverbindungen mit Molekulargewichten von 400 bis 6000 und/oder
C) im wesentlichen difunktionellen, gegebenenfalls unterschiedlichen Kettenverlängerungsmitteln, mit Molekulargewichten von 18 bis 399, und
D) Kettenabbruchsmiteln mit gegenüber NCO-Gruppeñ unterschiedlich reaktiven Wasserstoffatomen, in
E) im wesentlichen inerten Lösungsmitteln für die Reaktionsteilnehmer, in ein- oder mehrstufiger Umsetzung der Komponenten, dadurch gekennzeichnet, daß man die Komponenten A) mit den Komponenten B) und/oder C) in einem NCO/reaktive H-Atome-Verhältnis von 1,45:1 bis 1,02:1, vorzugsweise 1,15:1 bis 1,02:1 zu einem noch endständige NCO-Gruppen aufweisenden Polyurethan mit einem Molekulargewicht von mindestens 10000 und einem NCO-Gehalt von < 0,2 Äquivalenten NCO/1 000 g Polyurethan umsetzt und anschließend als Kettenabbruchsmittel D) unterschiedlich reaktive Polyamine mit einer reaktiveren Aminogruppe, vorzugsweise unterschiedlich reaktive Diamine, ausgewählt aus der Reihe von araliphatischen Diaminen und/oder aromatischen Diaminen mit unterschiedlich reaktiven Aminogruppen in einem NCO/NH₂-Verhältnis von 1 : 5 bis 1 : 1,66 zu Polyurethanen mit aromatischen Aminoendgruppen umsetzt..

Weiterer Gegenstand der Erfindung sind erleichtert vernetzbare Polyurethane nach dem vorbeschriebenen Verfahren, dadurch gekennzeichnet, daß die Polyurethane aromatisch gebundene Aminoendgruppen in einer Menge von ≤ 0,2 Äquivalenten aromatischer Aminoendgruppen pro 1 000 g Polyurethanfeststoff, bevorzugt ≤ 0,1 Äquivalente und besonders bevorzugt < 0,033 Äquivalente enthalten, wobei der bevorzugte Mindestgehalt ≤ 0,01 Äquivalente beträgt.

Weiterer Erfindungsgegenstand ist die Verwendung der nach dem beanspruchten Verfahren zugänglichen Polyurethane mit aromatischen Aminoendgruppen als Polyurethankomponente in Zweikomponentensystemen unter Zusatz von 1 bis 30 Gew.-%., bezogen auf Polyurethan, an Polyisocyanaten und gegebenenfalls üblichen Hilfs- und Zusatzstoffen, in Klebstoff-Zubereitungen bzw. Textil- und Lederbeschichtungs-Zubereitungen, vorzugsweise Lösungen.

Das erfindungsgemäße Verfahren bringt einerseits nach Erreichen der erwünschten Viskosität der Polyurethanlösungen in der Aufbaureaktion eine rasche Kettenabbruchsreaktion ohne wesentliche Veränderung der Viskosität, liefert aber zusätzlich den Vorteil, daß die Polyurethane gleichzeitig auch mit andersartigen, reaktiven NH₂-Gruppen versehen werden. Über diese aromatischen Aminoendgruppen ermöglichen die als Vernetzer nachträglich, gewöhnlich in einer Menge von 1-30 Gew.% bezogen auf Polyurethan, zugefügten Polyisocyanate die für die Verwendung als Beschichtung oder Klebstoffe sehr wichtige schnelle und intensive Vernetzung. Dabei sind die entsprechenden Lösungen hinreichend lagerstabil bzw. in den Zeiträumen der Verarbeitung stabil und die Vernetzungstemperaturen bei der Polyisocyanatvernetzungsreaktion liegen wesentlich niedriger; Vernetzungen können selbst bei Raumtemperatur eintreten, wenn man die Lösungsmittel-freien Beschichtungen länger stehen läßt. Diese intensive Vernetzung tritt bei niedrigen Temperaturen nicht ein, wenn man Polyurethane mit den üblichen Hydroxylendgruppen zur Umsetzung mit den Polyisocyanaten bringt. In diesem Falle läuft vielfach die NCO-Wasserreaktion, die durch vorhandene Wasserspuren in den Lösungsmitteln den'Pigmenten oderdurch die Luftfeuchtigkeit ausgelöst wird, schneller ab. Dadurch tritt die gleichzeitige Verknüpfung der verbliebenen Hydroxylendgruppen der Polyurethane nur unzureichend ein.

Durch Abstoppung mit monofunktionellen Verbindungen wie z. B. Butanol oder Dibutylamin werden nach dem Stand der Technik zwar ebenfalls die Viskositäten der Lösungen stabilisiert, jedoch enthalten die Polyurethane dann nicht reaktive Endgruppen, z. B. Urethan- oder Harnstoffgruppen. In diesem letzteren Falle läßt sich eine Vernetzung dann nur über die Anwendung hoher Temperaturen erzwingen. um die sehr viel weniger reaktiven Urethan- und/oder Harnstoffgruppen noch über Allophanat oder Biuretreaktionen einzubeziehen. Derartig hohe Temperaturen sind unwirtschaftlich, schädigen zum Teil die Polyurethane oder das zu beschichtende Substrat (z. B. Leder oder Spaltleder).

Die erfindungsgemäße Endgruppenmodifizierung erleichtert einerseits in hervorragender Weise und gezielt eine Vernetzung mit den als Vernetzer den Zweikomponentenpolyurethanen zugesetzten, vorzugsweise aromatischen Pöiyisocyanaten, ohne jedoch infolge der sehr geringen Mengen an Modifizierungsdiaminen D) - den anderweitig - durch Ausgangskomponenten A) bis C) und die Aufbauverfahren für das Polyurethan - festgelegten Aufbau der zu vernetzenden Polyurethane zu verändern.

Die erfindungsgemäß modifizierten Polyurethane sind nunmehr gegenüber den Vernetzerpolyisocyanaten in ihrer Reaktivität durch die Wahl der Abstopper-Diamine D) so abgestimmt, daß sich Verarbeitungsmischungen aus Polyurethanen und Polyisocyanatvernetzer hinreichend lagerstabil bzw. als für die Verarbeitungszeit stabil herstellen lassen. Verwendet man dagegen entsprechend dem Stand der Technik solche Kettenabbrecher, welche aliphatische Aminogruppen oder Hydrazidendgruppen ergeben, so kann mit den Polyisocyanatvernetzern praktisch augenblickliche Reaktion unter Verquallung der Lösung eintreten. Dasselbe gilt, wenn man das Polyurethan mit Amino- oder Hydrazidendgruppen dadurch aufbaut, daß man NCO-Prepolymere mit einem geringen Überschuß an aliphatischen Diaminen oder Dihydrazidverbindungen umsetzt. Die relativ schnell eintretende Reaktion selbst mit aliphatischen Diisocyanaten wurde entsprechend zum Aufbau von höhermolekularen Polyurethanen in Lösung benutzt (DE-PS 1 157 386).

Durch die erfindungsgemäße Umsetzung von bereits höhermolekularen Polyurethanen mit NCO-Endgruppen und Molgewichten > 10 000 mit den erfindungsgemäßen Kettenabbruchsmitteln auf der Basis von vorzugsweise araliphatischen Diaminen oder aromatischen Diaminen mit Aminogruppen unterschiedlicher Reaktivität, werden auch Polyurethanlösungen erhalten, welche in Lösung stabil sind und nicht eine schnelle Verpastung oder ein Ausfallen aus den Lösungsmitteln zeigen. Aminoendgruppenhaltige Verbindungen mit Molekulargewichten bis 6 000, wie sie durch Umsetzung von niedermolekularen NCO-Gruppen haltigen Voraddukten mit überschüssigen Diaminen entstehen (DE-B 16 94 152, Spalte 3 und 4) sind in Lösungsmitteln nicht ausreichend stabil und werden daher entsprechend der genannten Auslegeschrift anderweitig verwendet.

Nach dem erfindungsgemäßen Verfahren werden die Polyadditionsreaktionen zum Aufbau von Polyurethanen oberhalb eines Molekulargewichts von 10000 durch Zusatz der erfindungsgemäßen Kettenabbruchsmittel beendet. Oberhalb der genannten Grenze ist es jedoch möglich, Polyurethane mit gleicher Bruttozusammensetzung, entsprechend der Ausgangskomponenten, jedoch unterschiedlicher Kettenlänge (unterschiedlichem Molekulargewicht oberhalb von Molekulargewichten 10 000) und daraus resultierenden unterschiedlichen Eigenschaften herzustellen. Prinzipiell lassen sich Lösungen mit Konzentrationewvon z. B. 10 bis 70 Gew.-% mit beliebigen Viskositäten zwischen 500 und 80 000 mPa.s bei Raumtemperatur, vorzugsweise Viskositäten von 2 000 bis 60 000 mPa.s, aufbauen. Bevorzugt werden jedoch solche Polyurethanlösungen, welche Konzentrationen zwischen 20 und 60 Gewichts % und Viskositäten zwischen 2 000 und 50 000 mPa.s aufweisen.

Die erfindungsgemäß die den Kettenabbvruchsmitteln umzusetzenden, noch endständige NCO-Gruppen aufweisenden Polyurethane mit einem Molekulargewicht von mindestens 10000, entsprechend einem NCO-Gehalt von ≤ 0,84 % bzw. einem Endgruppenäquivalent von ≤ 0,2 Äquivalenten NCO-Endgruppen pro kg Polyurethan, werden nach prinzipiell bekannten Verfahren in ein- oder mehrstufiger Reaktionsweise aus den üblichen Ausgangsstoffen, vorzugsweise in Lösung, aufgebaut.

Als organische Polyisocyanate kommen im wesentlichen difunktionelle Diisocyanate in Beträcht, z. B. aliphatische, cycloaliphatische, araliphatische, aromatische oder heterocyclische Polyisocyanate mit einer NCO-Funktionalität von vorzugsweise 2, wie sie bei W. Siefken, Liebigs Annalen 562, 75 (1948) beschrieben werden und wie sie vorzugsweise als Diisocyanatkomponenten in der DE-A 2 929 501 aufgeführt sind. Bevorzugte Polyisocyanate sind Diphenylmethan-4-4'- und/oder -2,4'- und/oder -2,2'-diisocyanat, Toluylen-2,4- und/oder -2,6-diisocyanat, Paraphenylendiisocyanat, 3,3'-Dimethyl-diphenyl-4,4'-diisocyanat, Mono- bis-tetra-C₁-C₄-alkylsubstituierte Diphenylmethan-4,4'-diisocyanate, Naphthalin-1,5-diisocyanat, sowie aliphatische oder cycloaliphatische Diisocyanate wie Hexamethylendiisocyanat, Trimethylhexamethylendiisocyanat, Lysinmethylesterdiisocyanat, Dicyclohexylmethan-4,4'-, -2,4'- undi oder -2,2'-diisocyanat, die Hexahydrotoluylendiisocyanate, Dicyclohexyldiisocyanate, sowie das Isophorondiisocyanat.

Gegebenenfalls können kleine Anteile, ≤ 5 Mol-% an höherfunktionellen Isocyanaten mitverwendet werden, wie'z. B. Benzoi-1,3,5-triisocyanat, Polyphenyl-polymethylen-polyisocyanate, wie sie z. B. in den GB-A-874430 und 848671 beschrieben werden, Biuretgruppen aufweisende Polyisocyanate, Urethangruppenaufweisende Polyisocyanate, Isocyanuratgruppen aufweisende Polyisocyanate oder durch Umsetzung von tri- oder höherfunktionellen niedermolekularen Polyolen mit überschüssigen Mengen an Diisocyanaten hergestellte höherpolyfunktionelle Polyisocyanate.

Als höhermolekulare, im wesentlichen difunktionellen Polyhydroxylverbindungen mit Molekulargewichten von 400 bis 6 000, können alle höhermolekularen Polyhydroxylverbindungen eingesetzt werden, wie sie üblicherweise bei der Polyurethanherstellung verwendet werden. Typische Vertreter werden beispielsweise in der DE-A-2 920 501 aufgeführt und sind' beispielsweise höhermolekulare Polyester, Polyesteramide, Polyether, Polyacetale und Pölycarbonate, vorzugsweise mit Molekulargewichten von 800 bis 3000 und Verbindungen mit etwa zwei Hydroxylgruppen pro höhermolekularer Polyhydroxylverbindung der genannten Molekulargewichtsbereiche. Die für das erfindungsgemäße Verfahren geeigneten, Hydroxylgruppen enthaltenden Polyester sind beispielsweise Umsetzungsprodukte von mehrwertigen, vorzugsweise zweiwertigen Alkoholen mit mehrwertigen, vorzugsweise zweiwertigen Carbonsäuren. Carbonsäureestern und/oder Carbonsäureanhydriden. Gleichfalls verwendet werden können Hydroxycarbonsäuren oder Lactone wie z. B. Caprolacton. Verwendbare Polyester werden beispielsweise auch in Houben-Weyl, Band XIV/2, S. 12 bis 29, Thieme Verlag, Stuttgart 1963, beschrieben.

Die Polycarbonsäuren können aliphatischer, cycloaliphatischer, aromatischer oder heterocyclischer Natur sein. Als Beispiele für solche Carbonsäuren und deren Derivate seien genannt : Oxalsäure. Malonsäure, Bernsteinsäure, Glutarsäure, Adipinsäure, Pimelinsäure, Korksäure, Azelainsäure, Sebacinsäure, Maleinsäure, Fumarsäure, Phthalsäure, Isophthalsäure, Terephthalsäure, Diethylbernsteinsäure und 1,4-Cyclohexandicarbonsäure.

Als Alkoholkomponenten können beispielsweise Ethylenglykol, Diethylenglykol, Triethylenglykol. 1,2- und 1,3-Propandiol, 1,4-, 1,3-, 1,2- und 2,3-Butandiol, 1,5-Pentandiol, 1,6-Hexandiol, 1,8-Octandiol, Neopentylglykol, 1,4-Bis-(hydroxymethyl)-cyclohexan, 2-Methyl-1,3-propandiol und alkoxylierte Bisphenole oder deren Hydrierungsprodukte der allgemeinen Formel 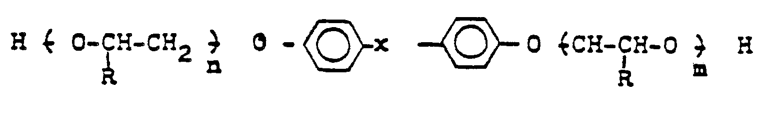 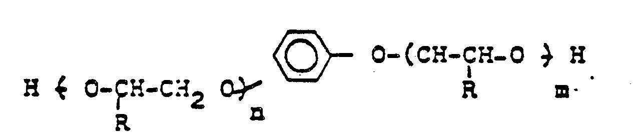 wobei
X : F₁―C―R₂ ; S0₂ ; N-R₃
n und m = 2-6
R : H, CH₃ R₁ gleich oder ungleich R₂, aber auch mit X einen cycloaliphatischen Kohlenwasserstoffring mit 5 bis 6 C-Atomen darstellen kann, Wasserstoff oder Alkylreste mit 1 bis 6 C-Atomen, symbolisiert verwendet werden.

In untergeordneten Maße (≤ etwa 5 Mol-%) lassen sich auch höherfunktionelle Polyole wie beispielsweise Glycerin, Trimethylolpropan, 1,2,6-Hexantriol, 1,2,4-Butantriol, Pentaerythrit oder Sorbit verwenden. Es sind auch Polyester mit anteiligen Doppel- oder Dreifachbindungen aus ungesättigten Fettsäuren einsetzbar, ebenso Polyester oder Mischpolyester aus Lactonen wie z. B. c-Caprolacton oder aus Hydroxycarbonsäuren wie z. B. w-Hydroxycapronsäure.

Für das beschriebene Verfahren verwendbare Polyesteramide entstehen bei anteiligem Ersatz des zweiwertigen Alkohols der Polyester durch Aminoalkohole, Diamine oder Polyamine. Bevorzugt werden dabei Ethanolamin oder Ethylendiarnin.

Als höhermolekulare Polyhydroxyverbindungen können erfindungsgemäß auch lineare oder schwach verzweigte, vorzugsweise zwei Hydroxylgruppen aufweisende Polyether dienen, z. B. Tetrahydrofuran-polymerisate oder Additionsprodukte aus Alkylenoxiden an Starterverbindungen. Als Alkylenoxide eignen sich beispielsweise Ethylenoxid, Propylenoxid, Butylenoxid, Styroloxid und Epihalogenhydrine. Als Starterkomponenten werden Verbindungen mit beweglichen H-Atomen eingesetzt, wie Wasser. Alkohole, Amine, z. B. Ethylenglykol, 1,2- und 1,3-Propylenglykol, 2,2-Bis-(4-hydroxyphenyl)-propan und Anilin.

Als Polyhydroxylverbindungen sind ebenfalls Polyacetale einsetzbar, die z. B. durch Kondensation von Formaldehyd oder eines anderen Aldehyds mit mehrwertigen Alkoholen der beschriebenen Art entstehen.

Besonders bevorzugt sind Polycarbonate der an sich bekannten Art, die z. B. aus den zuvor genannten Diolkomponenten, insbesondere auf Hexandiol-1,6-Basis, mit z. B. Diphenylcarbonat oder Phosgen hergestellt werden können.

Als niedermolekulare Kettenverlängerungsmittel mit beweglichen Wasserstoffatomen (Zerewitinoff-aktiven H-Atomen) werden solche Verbindungen verwendet, die in etwa bifunktionell mit Isocyanaten reagieren und Molekulargewichte von 18 sowie 32 bis 399, vorzugsweise 62 bis 254, aufweisen.

Insbesondere sind für diesen Zweck niedermolekulare Diole aber auch Aminoalkohole oder Diamine oder Mischungen der Kettenverlängerungsmittel bzw. eine stufenweise Reaktion mit unterschiedlichen Kettenverlängerungsmitteln, geeignet.

Erfindungsgemäß geeignete Kettenverlängerungsmittel sind Diole oder deren Gemische wie z. B. Ethylenglykol, 1,2- und 1,3-Propandiol, 1,4-, 1,3-, 1,2- und 2,3-Butandiol, 1,5-Pentandiol, 1,6-Hexandiol. Neopentylglykol, 1,4-Bis(hydroxymethyl)-cyclohexan. 2-Methyl-1.3-propandiol. Di-, Tri- oder Tetraethylenglykol. Di-, Tri- oder Tetrapropylenglykol, alkoxylierte Bisphenole oder deren Hydrierungsprodukte, wie sie vorstehend bereits als Diolkomponenten zur Herstellung von Polyestern beschrieben wurden oder Esterdiole, z. B. Hydroxypivalinsäure/Neopentylglykolester.

In anteiligen Mengen, vorzugsweise -- 5 Mol% können auch höherfunktionelle Polyole mitverwendet werden, z. B. Trimethylolpropan.

Ferner sind Aminoalkohole wie Ethanolamin, N-Methyldiethanolamin oder 3-Aminopropanol einsetzbar.

Ebenso eignen sich aliphatische oder cycloaliphatische Diamine wie Ethylendiamin, Tetramethylendiamin, 1,6-Hexamethylendiamin, 1,12-Dodecamethylendiamin, 1-Amino-3-aminomethyl-3,5,5-trimethylcyclohexan, 2,4- und 2,6-Hexahydrotoluylendiamin, 2,4'- und 4,4'-Diaminodicyclohexylmethan, 1-Amino-2-aminomethyl-3,3,5(3,5,5)-trimethylcyclopentan, Toluylendiamin, p-Xylylendiamin, 4,4'-Diaminodiphenyimethan, Hydrazin, Methylhydrazin, N,N'-Dimethylhydrazin und deren Homologe.

Aromatische Diamine oder Wasser sind als alleinige Kettenverlängerungsmittel nicht bevorzugt, da sie durch Sauerstoff- und Lichteinfluß relativ schnell verfärbende Polyurethane ergeben.

Ausführliche Beispiele für diese erfindungsgemäßen Ausgangsmaterialien (Polyisocyanate, höhermolekulare Polyhydroxylverbindungen und niedermolekulare Polyhydroxylverbindungen und niedermolekulare Kettenverlängerungsmittel, sowie gegebenenfalls Katalysatoren, Hilfs- und Zusatzstoffe) werden in der DE-A-2 854 384 aufgeführt.

Die Polyurethanlösungen werden nach dem erfindungsgemäßen Verfahren vorzugsweise so hergestellt, daß man zur Lösung der höhermolekularen Polyole und/oder niedermolekularen Kettenverlängerungsmittel in einem Teil des Lösungsmittels die Polyisocyanate zugibt. Mit fortschreitender Umsetzung und steigender Viskosität kann dann portionsweise bis zur erforderlichen Endkonzentration nachverdünnt werden, wobei die Umsetzungsprodukte bis zur Bildung des noch mindestens 0,2 Äquivalente NCO/1 000 g enthaltenden Polyurethans geführt wird, das dann erfindungsgemäß abgestoppt und in Polyurethane mit aromatischen Aminoendgruppen überführt wird.

Die Reaktionstemperaturen liegen etwa bei 30 bis 130 °C, vorzugsweise bei 50 bis 100°C.

Alternativ dazu kann man in einer Zweistufenreaktion zunächst die höhermolekularen Polyole und gegebenenfalls niedermolekularen Diole mit den Diisocyanaten in Schmelze oder gegebenenfalls in (einem Teil des) Lösungsmittel(s) umsetzen. Nachfolgend wird mit den genannten niedermolekularen Kettenverlängerungsmitteln die Polymerkette verlängert und die Viskosität erhöht ; man verdünnt gegebenenfalls, wie beschrieben auf die erforderliche Endkonzentration.

In einem bevorzugten Verfahren werden die höhermolekularen Polyole mit einem Überschuß des Polyisocyanats zunächst zu einem NCO-Prepolymeren umgesetzt, das dann mit Glykolen, z. B. Butandiol-1,4 und/oder (stufenweise) mit Diaminen, z. B. Isophorondiamin oder N-(ß-Hydroxyethyl)-ethylendiamin verlängert wird, bis das gewünschte, noch NCO-Gruppen enthaltende Polyurethan erhalten wird, das der erfindungsgemäßen Abbruchsreaktion unterworfen werden soll.

Es ist ein besonders bevorzugtes Verfahren, zunächst höhermolekularer Polyhydroxylverbindung, Polyisocyanat und Diolkettenverlängerer und gegebenenfalls Lösungsmittel ein- oder mehrstufig, d. h. direkt oder über NCO-Prepolymere, zu einem bereits relativ hochmolekularen Polyurethan mit endständigen NCO-Gruppen und somit bis zu einer bereits relativ hochviskosen PU-Lösung umzusetzen (der Anteil der Diol-Kettenverlängerungsmittel beträgt hierbei > 80 % der Gesamtkettenverlängerer). Durch Zugabe von (cyclo)-aliphatischen Diaminen in geringen Mengen kann eine schnelle Viskositätserhöhung in der Lösung auf die gewünschte Höhe der.Viskosität vorgenommen werden, wobei das noch NCO-Gruppen aufweisende Polyurethan mit Molgewichten -- 10 000 erhalten wird, das dann der erfindungsgemäßen Abstopperreaktion unterworfen wird.

Die so hergestellten, noch NCO-Gruppen aufweisenden Polyurethane oder Polyharnstoffe sollen ein mittleres Molekulargewicht oberhalb von 10000 aufweisen. Das mittlere Molekulargewicht berechnet sich nach der Formel 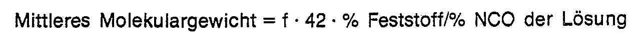 f bedeutet die Funktionalität des Polyurethans, die vorzugsweise um 2 liegt. Je nach Verwendung von Aufbaumaterialien, die anteilig mehr als zweifunktionell oder weniger als zweifunktionell sind, kann die Funktionalität etwa größer oder etwas kleiner als 2 sein.

Die Gesamtfunktionalität des Polyurethans kann dabei zwischen etwa 2,2 und 1,95, bevorzugt innerhalb engerer Grenzen, d. h. 2,05 bis 1,98 und besonders bevorzugt bei 2 liegen. Die Funktionalität der Polyurethanlösung berechnet sich aus den Komponenten mit Hilfe einer Formel, wie sie in der DE-A 3227679 als Vorbemerkung im Beispielteil angegeben ist. Die Funktionalität des Polyurethans ist dadurch begrenzt, daß die NCO-Gruppenhaltige Polyurethanzwischenstufe in jedem Fall noch in den Lösungsmitteln für das Polyurethan in den gewünschten Konzentrationsbereichen löslich bleibt. Je nach Konzentration und eingestellter Viskosität der Lösungen kann die Funktionalität in den angegebenen Größenordnungen variiert werden. Bei der Herstellung der NCO-Endgruppen-haltigen Polyurethanzwischenstufen werden vorzugsweise Konzentration und Viskosität in die bereits später für die Anwendung erwünschte Größenordnung gebracht bzw. höherkonzentrierte Lösungen hergestellt, die dann auf Verarbeitungsviskosität bei der Verwendung verdünnt werden.

Der NCO-Gehalt in den NCO-haltigen Polyurethanzwischenstufen soll vor der erfindungsgemäßen Kettenabbruchsreaktion ≤ 0,84 % NCO, bezogen auf PU-Feststoffgehalt, entsprechend ≤ 0,2 Äquivalente NCO pro 1 000 g Polyurethanfeststoff (bei der Funktionalität = 2,0 berechnet) betragen, liegt vorzugsweise bei ≤ 0.42 % NCO entprechend ≤ 0,1 Äquivalent NCO pro 1 000 g PU und besonders bevorzugt ≤ 0,14 % NCO entsprechend ≤ 0,033 Äquivalente NCO pro 1 000 g Polyurethan. Die Untergrenze des NCO-Gehaltes der PU-Zwischenstufe liegt bei etwa 0,00466 % NCO, entsprechend ≥ 0,001 Äquivalent NCO pro kg Polyurethan, ist aber bevorzugt höher, entsprechend ≥ 0,014 % NCO entsprechend ≥ 0,0033 Äquivalente pro 1 000 g Polyurethan, bevorzugt ≥ 0,028 % NCO entsprechend ≥ 0,0066 Äquivalente pro 1 000 g Polyurethan, oder oft auch ≥ 0,01 Äquivalente NCO pro 1 000 g Polyurethan.

Als Lösungsmittel für die Polyurethane dienen dabei die üblichen für die Polyurethanreaktionen bekannten inerten Lösungsmittel, wie z. B. Tetrahydrofuran, Dioxan, Ethylacetat, Methylethylketon, Butylacetat, Toluol, sowie auch die polareren Lösungsmittel wie Dimethylformamid oder Dimehtylacetamid. Die leicht flüchtigen Ether oder Ester bzw. Kohlenwasserstoffe der genannten Art sind jedoch bevorzugt.

Zur erfindungsgemäßen Umsetzung der genannten noch geringe Mengen an NCO-Gruppen enthaltenden, bereits höhermolekularen Polyurethane mit den kettenabbruchmitteln werden als Kettenabbruchmittel D) Polyamine, in denen eine NH₂-Gruppe deutlich reaktiver ist als die anderen aromatisch gebundenen Aminogruppen, vorzugsweise werden Diamine aus der Gruppe der araliphatischen Diamine und/oder aromatischen Diaminen oder aromatische Diamine mit unterschiedlich reaktiven NH₂-Gruppen verwendet. Die unterschiedliche Reaktivität der aromatischen Diamine wird dabei durch sterische Abschirmung der einen Aminogruppe bzw. Desaktivierung durch Elektronen-abziehende Substituenten hervorgerufen.

Als Kettenabbruchsmittel werden beispielsweise araliphatische Polyamine, vorzugsweise Diamine vom Formeltyp I und/oder und II verwendet : 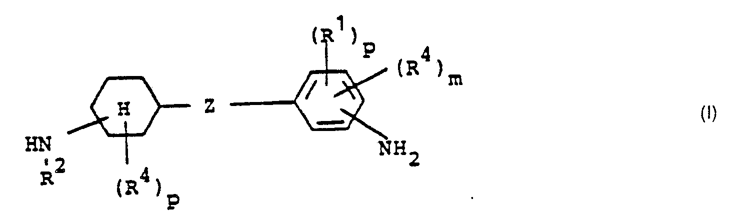 wobei Z = 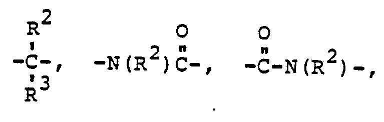
(―S)ₘ―, ―SO₂, -0-, bevorzugt Z = ―CH₂― und ―C(CH₃)₂―
R¹ gegebenenfalls verzweigtes C₁-C₁₃-Alkyl, 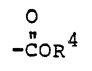 Halogen ;
R² H, gegebenenfalls verzweigtes C₁-C₆-Alkyl,
R³ H, Aryl, gegebenenfalls verzweigtes Cₗ-C₆-Alkyl,
R₄ gegebenenfalls verzweigtes C₁-C₆-Alkyl,
m 0, 1, 2 oder 3,
p 0 oder 1
wobei für Formel (I) gilt : (m + p) = 0, 1, 2, 3 oder 4 ; 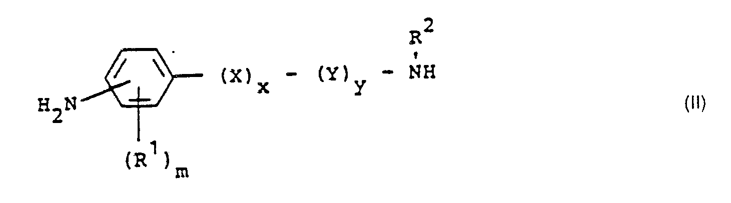 wobei
X ―CH₂―CH₂―CH₂―, -NH-, (dabei muß y ≠ Null sein), -NR⁴⁻, (dabei muß y ≠ Null sein), -0-, (dabei muß y ≠ Null sein), -S-, (dabei muß y ≠ Null sein),
x 0 oder 1,
Y 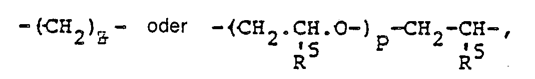 wobei
Z = Null oder ganze Zahlen von 1 bis 6,
p ₌ Null oder ganze Zahlen von 1 bis 6,
y 0 oder 1 und
R⁵ H oder Methyl bedeutet.

Weiterhin sind aromatische Polyamine der Formeln (III) oder (IV), vorzugsweise aromatische Diamine mit unterschiedlicher Reaktivität der Aminogruppen (aus sterischen Gründen oder Substituenteneffekten) geeignet : 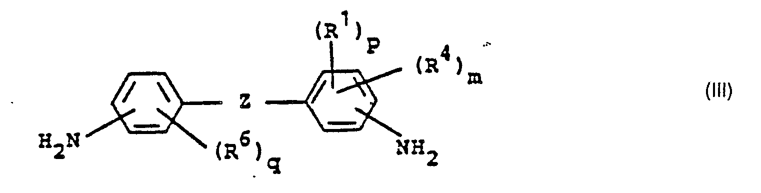
R₆ = Cₗ-C₃-Alkyl, jedoch nicht in Nachbarschaft sur NH₂-Gruppe,
m = 0, 1, 2 oder 3,
p = 0 oder 1, wobei (m + p) = 1, 2, 3 oder 4 sein muß,
q = 0 oder 1, wobei (m + p) ―q 1 sein muß ; 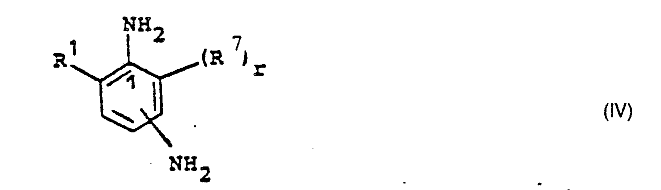
(Die zweite NH₂-Gruppe ist in meta- oder para-Stellung zur ersten Aminogruppe ; mindestens eine Nachbarstellung zu der zweiten Aminogruppe muß unsubstituiert bleiben)
R⁷ = C₂₋C₄-Alkyl, gegebenenfalls verzweigt,
r = 0 oder 1, wobei im Falle von R' = COOR⁴ r = Null sein kann.
Durch die Wahl der Substituenten R₁ und R⁴ und/oder durch die Summe von p und m kann die Aktivität der weniger reaktiven aromatischen (primären) Aminogruppe in weiten Grenzen variiert werden.
Bevorzugte araliphatische Diamine sind solche der Formel V : 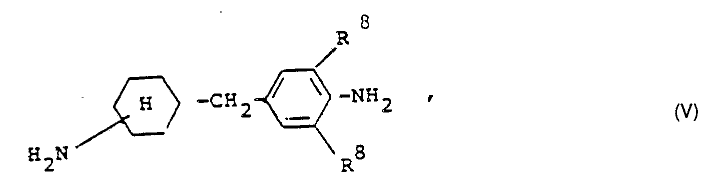 wobei R⁸, gleich oder verschieden, eine lineare oder gegebenenfalls verzweigte Alkylgruppen mit 1 bis 4 C-Atomen bedeutet.

Bevorzugte aromatische Diamine mit underschiedlich reaktiven Aminogruppen sind solche der Formel VI : 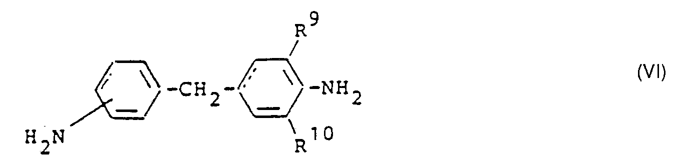 wobei
R⁹ lineare oder gegebenenfalls verzweigte Alkylgruppen mit 1 bis 4 C-Atomen, ―CO₂R⁴ oder Halogen (F, Cl, Br oder J)
und
R¹⁰ lineare oder gegebenenfalls verzweigte Alkylgruppen mit 1 bis 4 C-Atomen oder Halogen sind.

In der Formeln (II) bis (VI) haben die nicht genannten Substituenten die gleiche Bedeutung wie in Formel (I) ; für den Fall, daß die Substituenten am aromatischen Kern entfallen, so steht an dieser Stelle ein Wasserstoff, was nicht besonders gekennzeichnet wird.

Neben den Verbindungen der Formeln (I) bis (VI) sind weitere, ausgewählte Verbindungen geeignet, wie sie in der folgenden Aufzählung enthalten sind :

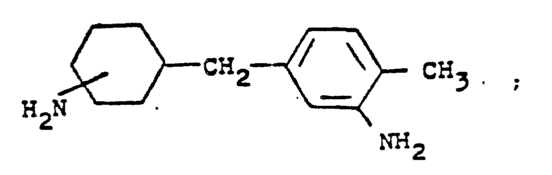

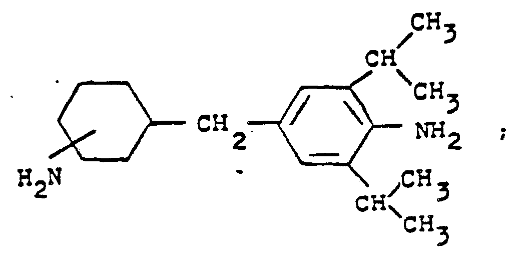

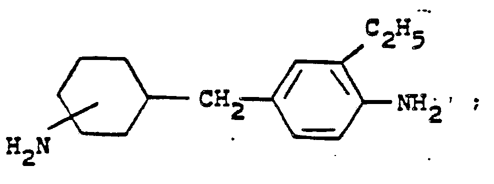

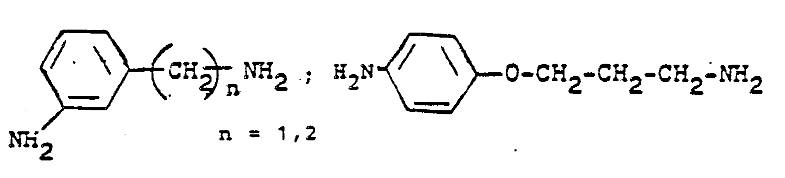

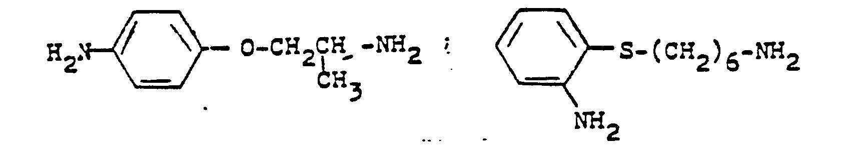

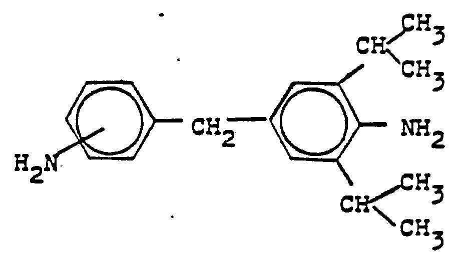

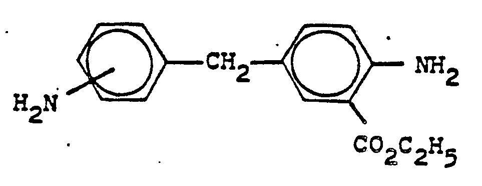

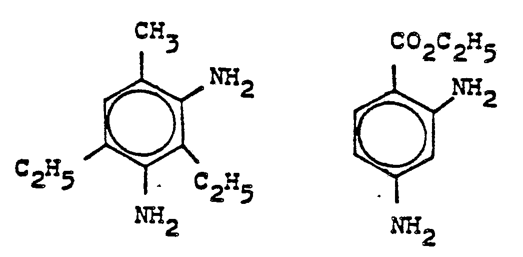

Die Umsetzung des noch NCO-Gruppen in den angegebenen Mengen tragenden, höhermolekularen Polyurethans in Form seiner Lösungen mit den Kettenabbruchsmitteln D) erfolgt in einem Verhältnis von 1 : bis 1 : 1,66, vorzugsweise 1 : 2,5 bis 1 : 1,95 und besonders bevorzugt mit den rechnerisch äquivalenten Mengen 1 : 2. Hierbei bilden sich Polyurethane mit endständigen aromatischen Aminogruppen, welche in der Menge etwa den endständigen NCO-Gruppen im berreits höhermolekularen Polyurethan des Mindestmolekulargewichts 10000 entsprechen.

Bei Umsetzungen im Molverhältnis zwischen 1 : 1,66̅ und 1 : 2 kann eine teilweise Weiterreaktion der Kettenabbruchsmittel in bifunktioneller Form erfolgen, was bisweilen erwünscht ist, wenn man die Viskosität noch etwas nach oben korrigieren will. Bei Umsetzungsverhältnissen zwischen 1 : 2 und 1 : 5 bleiben zwangsläufig freie Diamine in der Lösung enthalten. Da insgesamt der Gehalt an Kettenabbruchsmittel-Diaminen außer-ordentlich gering ist, spielen diese kleinen Mengen an freien aromatischen Diaminen vom Typ D) in der Lösung keine Rolle mehr. Sie setzen sich mit den bei der späteren Verwendung vorgesehenen Vermischung mit polyfunktionellen Polyisocyanaten ohne Störung um und werden dann in das vernetzte Polymere eingebaut. Es ist bei araliphatischen Diaminen als Kettenabbruchsmittel bevorzugt, Kettenabbruchsmittel in etwa äquivalentem Verhältnis (1 : 2) einzusetzen. Bei Kettenabbruchsmittel-Diaminen, bei welchen die Unterschiede der Reaktivität der Aminogruppen geringer sind, ist es vorteilhaft, Mengen oberhalb von 1 : 2 (und bis 1 : 5) einzusetzen, um einer gegebenenfalls unerwünschten Kettenverlängerungsreaktion, die sich mit der weniger reaktiven Aminogruppe ergeben kann, entgegenzuwirken.

Die so nach Kettenabbruchsreaktion erhaltenen hochmolekularen Polyurethane enthalten aromatische Endgruppen in Mengen, die den vorher vorhandenen NCO-Gruppen entsprechen und gegebenenfalls sehr geringe Mengen an den überschüssigen Diaminen, soweit Überschüsse eingesetzt wurden. Trotzdem sind die Lösungen viskositätsstabil und erleiden keinen Abbau, wie dies bei aliphatischen Aminen der Fall sein kann.

Die so hergestellten, aromatische Aminoendgruppen enthaltenden Polyurethane zeigen im wesentlichen die Eigenschaften der Polyurethane, wie sie den Baukomponenten A), B) und C) entsprechen. Ihre sehr untergeordnete Menge hat praktisch keinen Einfluß auf die Lichtbeständigkeit der Polyurethane. wodurch die Einführung der aromatischen Aminoendgruppen die Vernetzbarkeit und Verknüpfung mit den für die Verwendung wichtigen, als Vernetzer wirksamen Polyisocyanaten gegeben ist.

Den Lösungen können selbstverständlich die üblichen Zusatzstoffe wie UV-Stabilisatoren, Antioxidantien, Lichtschutzmittel, Additive, Gleitmittel, Füllstoffe, Farbstoffe, Siliconderivate oder weitere lösliche Polymere bzw. Pigmente oder Kurzfasern beigemischt werden. Die aromatischen Aminoendgruppen aufweisenden Polyurethane nach dem Verfahren der Erfindung können als Einkomponentenpolyurethan einer üblichen Verarbeitung, z. B. als Beschichtung, zugeführt werden. Die bevorzugte Verwendung finden sie jedoch in Zweikomponentenpolyurethansystemen, indem sie mit Mengen von 1 bis 30, bzw. 2 bis 25 Gew.% bezogen auf Polyurethan, an mehr als zweifunktionellen Polyisocyanaten versetzt werden. Derartige Polyisocyanate sind aliphatische oder cycloaliphatische, bevorzugt aromatische Polyisocyanate mit einer Funktionalität über 2,5, vorzugsweise von - 3 z. B. Biurettriisocyanate oder Trimerisate des Hexamethylendiisocyanats oder Isophorondiisocyanats, trimeres Toluylen-2,4-diisocyanat, Mischtrimere aus Hexandiisocyanat und Toluyendiisocyanat, Umsetzungsprodukte von Toluylen-2,4-diisocyanat mit Triolen oder Polyolen, z. B. mit Trimethylolpropan, oder polyfunktionelle Mehrkernpolyisocyanate auf Basis von Polyaminen aus der Anilin-Formaldehyd-Kondensationsreaktion.

Sollen bei der Vernetzung der erfindungsgemäß zugänglichen Polyurethane besondere Effekte gewünscht werden, können den Zweikomponentenpolyurethanlösungen noch andere Polymere zugesetzt werden, z. B. Zelluloseacetobutyrate, Nitrozellulose, hydroxygruppenhaltige VinylchloridNinylacetat-Copolymerisate, hydroxygruppenhaltige Acrylate oder Polyvinylchlorid, oder auch weitere modifizierende Polyurethan-Reaktions-komponenten wie höherfunktionelle Hydroxypolyester oder auch weitere aromatische Polyamine, wie beispielsweise 4,4'-Diaminodiphenylmethan, 4,4'-Diamino-3,5-diisopropyldi- phenylmethan oder 2,4-Diamino-3,5-diethyltoluol.

Die genannten Vernetzer-Polyisocyanate können den Lösungen untergerührt werden, ohne daß ein nennenswerter Viskositätsanstieg innerhalb einer Verarbeitungszeit von Stunden oder gegebenenfalls wenigen Tagen eintritt. Die Polyisocyanate können gegebenenfalls aber auch bei kontinuierlichen Beschichtungsvorgängen in dem beabsichtigten Mischungsverhältnis kontinuierlich kurz vor der Applikationsstelle untergemischt werden.

Nach oder während der Entfernung der Lösungsmittel tritt eine gewünschte Vernetzung ein, die relativ unempfindlich gegenüber Wasserspuren in den Lösungsmitteln ist und zu einer sicheren Verknüpfung der Aminoendgruppen-haltigen Polyurethane mit den übrigen Vernetzerpolyisocyanaten und deren Reaktionsprodukten, die sich z. B. durch Reaktion mit Luftfeuchtigkeit ergeben, führt. Die notwendigen Vernetzungstemperaturen sind gegenüber Hydroxylendgruppen-haltigen Polyurethanen deutlich vermindert bzw. die Vernetzungsdichte und die davon abhängigen Eigenschaften verbessert. Eine Vernetzung tritt nach Entfernung. der Lösungsmittel und längerem Lagern auch bereits bei Raumtemperatur ein. Die Vernetzungseffekte sind insgesamt deutlich günstiger als bei den vorbekannten Hydroxylendgruppen-tragenden Polyurethanen. Daher finden derartige Polyurethanzubereitungen bevorzugten Einsatz zur Beschichtung von textilien Unterlagen (Geweben, Gewirken oder Vliesen), insbesondere wärmesensiblen textilen Unterlagen oder Leder oder als Klebstoffe, insbesondere für wärmesensible Kunststoffsubstrate.

### Experimenteller Teil

### Beispiel 1

1 241 g eines Polyesters aus Adipinsäure und Butandiol-1,4 der OH-Zahl : 122 und einer Säurezahl von < 0,9 werden 1 Stunde bei 100 °C im Wasserstrahlvakuum entwässert. Es werden 4900 g Tetrahydrofuran zugegeben. Nach Zugabe von 121,5 g Butandiol-1,4 werden 737,3 g 4,4'-Diisocyanatodiphenylmethan zugegeben. Nach Katalyse mit 12,5 ppm (bezogen auf Polyester) Dibutylzinndilaurat wird die Reaktion bei 50 bis 55 °C bis zu einem konstanten NCO-Wert (0,22 % in der Lösung nach 19 Stunden - entsprechend 0,73 % NCO in der PU-Festsubstanz).

Jeweils 600 des NCO-Prepolymeren werden mit einer 10%igen Lösung von 1-Amino-3.3,5-trimethyl-5-aminomethylcyclohexan in Tetrahydrofuran zu 75 % der Theorie kettenverlängert. Man erhält Lösungen mit einer Viskosität von 30 000 mPa.s bei 25 °C und einem NCO-Gehalt von 0,055 % bezogen auf PU-Lösung, entsprechend 0,183% NCO, bezogen auf PU-Festsubstanz. Dies entspricht nach der angegebenen Formel einem mittleren Molekulargewicht von etwa 45 000.

Die Lösungen wurden mit verschiedenen Abstoppern (siehe Tabelle 1) versetzt (erfindungsgemäß und Vergleichsversuche) und auf 20 % Feststoff mit Tetrahydrofuran verdünnt.

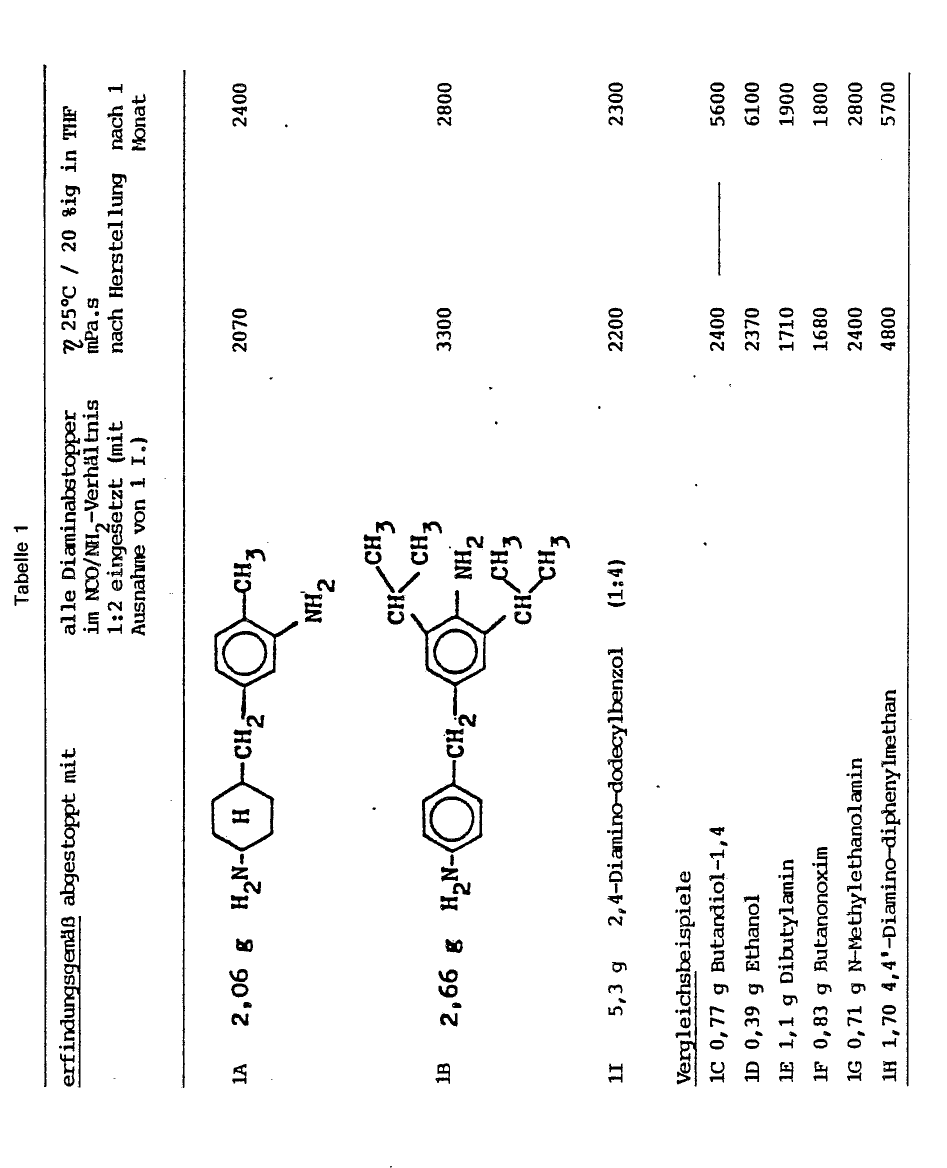

### Beispiel 1 K (Vergleich)

Anstatt 737,3 g werden 747,3 g Diisocyanatodiphenylmethan verwendet. Man erhält einen (stabilen) NCO-Endwert der PU-Lösung von 0,31 %, der einem mittleren Molekulargewicht von nur ca. 8 100 entspricht. 600 g des Prepolymers werden mit 9,65 g des araliphatischen Diamins 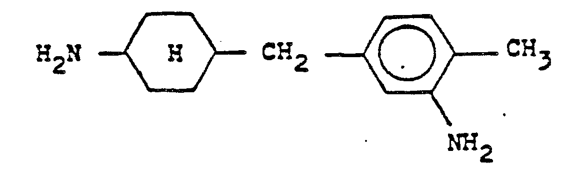 abgestoppt.

Die 20 %ige Lösung hat eine Viskosität von 250 mPa.s bei 25 °C und verpastet nach 1-wöchigem Stehen bei Raumtemperatur, zeigt also nicht die gewünschte Lagerstabilität.

### Beispiel 2

1 281 g Polytetramethylenetherglykol (Polymeg 1 000 Quaker Oats) der OH-Zahl 112,2 wurden 1 h bei 100 °C im Wasserstrahlvakuum entwässert. 4 900 g Tetrahydrofuran (THF) wurden zugegeben. 115,3 g Butandiol-1,4 wurden bei 40 °C eingerührt, gefolgt von 703,2 g 4,4'-Diisocyanatodiphenylmethan. Nach Zugabe von 12.5 ppm Dibutylzinndilaurat (bezogen auf Polyether) wurde die Reaktion bei 50 bis 55 °C bis zum Erreichen eines konstanten NCO-Wertes von 0,26 % in der Lösung weitergeführt (5 Stunden).

Jeweils 600 g des NCO-haltigen, bereits höhermolekularen Prepolymeren wurde zu 45 % der Theorie der NCO-Gruppen mit Isophorondiamin verlängert, was einem mittleren Molekulargewicht des NCO-Endgruppen-haltigen Polyurethans von ca. 17500 entspricht.

Die Lösungen wurden abgestoppt (erfindungsgemäß oder Vergleichsversuche) und mit Tetrahydrofuran (THF) auf 20 % Feststoffgehalt verdünnt.

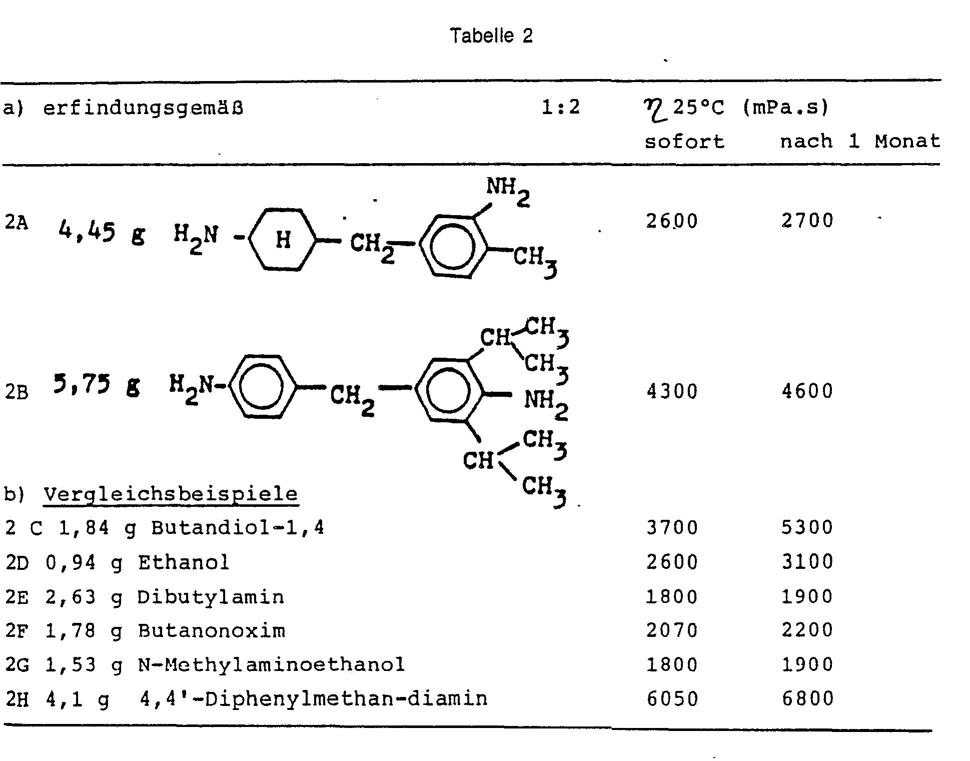

### Beispiel 2K (Vergleich)

Anstatt 703,2 g 4.4'-Diisocyanatodiphenylmethan werden 725 g verwendet. Man erhält einen stabilen NCO-Wert von 0,32 % in der PU-Lösung (mittleres Molekulargewicht des NCO-Endgruppen-haltigen « Polyurethans ca. 8 000).

1 100 g des Prepolymeren werden mit 18,3 g des Diamins 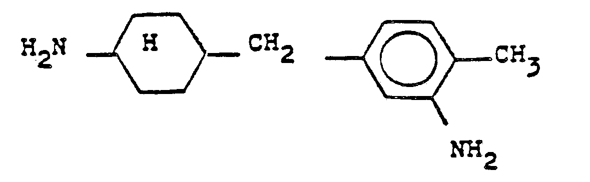 abgestoppt und auf 20 % Feststoff mit THF verdünnt. Die Lösung hat eine Viskosität von 200 mPa.s bei 25 °C und verpastet nach 3 Tagen.

### Beispiel 3

1 000 g eines Polyesters aus Adipinsäure und Butandiol-1,4 (OH-Zahl 50,0, Säurezahl 0,8) werden für eine Stunde bei 100 °C im Wasserstrahlvakuum entwässert. Nach Zugabe von 96 g Butandiol-1,4, 66,1 g Ethylenglykol und 4 260 g Tetrahydrofuran werden bei 40 bis 45 °C 670 g 4,4-Diisocyanatodiphenylmethan zugegeben. Die Reaktion läßt die Temperatur auf 55 °C ansteigen.

Nach Erreichen einer Viskosität von ca. 30 000 mPa.s bei 25 °C wird der Rest-NCO-Wert ermittelt und die Lösung abgestoppt. Anschließend wird mit THF auf 20 % Feststoff verdünnt.

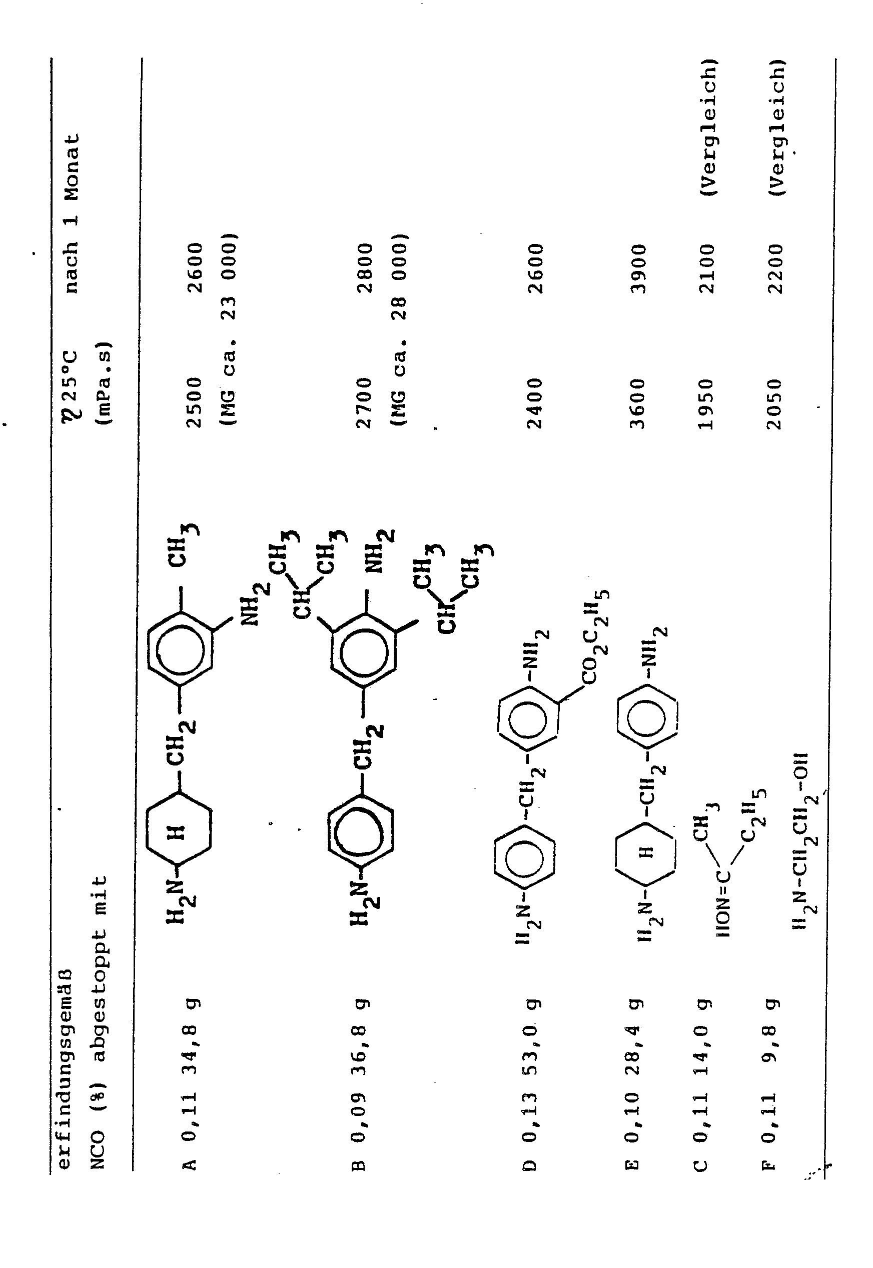

### Beispiel 4

Zur einer Lösung von 266,1 g einer Mischung von 65 % 2,4- und 35 % 2,6-Toluylendiisocyanat in 800 g Tetrahydrofuran (THF) werden eine Lösung von 66,58 g Butandiol-1,4 und 87,29 g Hexandiol-1,6 in 180 g THF derart eingetropft, daß die exotherme Reaktion die Temperatur bei 55 bis 60 °C hält. Nach 8 Stunden bei 50 bis 55 °C wird ein konstanter NCO-Wert von 0,17 % in der PU-Lösung erhalten.

Die Lösung wird zu 34 % des NCO-Gehaltes mit 1,65 g Isophorondiamin verlängert, wobei die Viskosität von 1000mPa.s bei 28 °C auf 16 000 mPa.s bei 43 °C ansteigt. Mit 8,15 g (3-Amino-4-methylbenzyl)-cyclohexylamin wird abgestoppt. Man erhält nach Verdünnen auf 20 % Feststoff eine stabile Lösung mit einer Viskosität von 3 950 mPa.s.

### Beispiel 5

325 g eines Phthalsäure/Adipinsäure-Ethylenglykolesters (MG 1 750) und 75 g Ethylenglykol-Butandiolpolyadipats (MG 2 000) werden mit 46,0 g einer Mischung von 65 % 2,4- und 35 % 2,6-Toluylendiisocyanat bei 80 °C verrührt. Mit zunehmender Viskosität werden 192 g Ethylacetat zugetropft. Nach 12 Stunden erhält man einen NCO-Wert von 0,54 % (entspricht einem mittleren MG von 10 900).

Mit 18,2 g 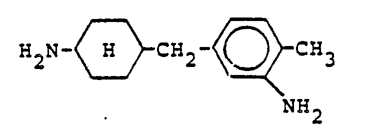 wird abgestoppt.

Man erhält eine stabile Lösung der Viskosität 14 000 mPa.s bei 25 °C.

### Beispiel 6

254 g eines Hexandiolpolycarbonats der OH-Zahl 271,5 werden in 980 g Tetrahydrofuran gelöst. Nach Zugabe von 166,1 g 4,4'-Diisocyanatodiphenyimethan steigt die Temperatur langsam auf 56 °C. Nach Abklingen der leicht exothermen Reaktion wird die Lösung noch 4 Stunden bei 50 bis 60 °C gehalten.

Man erhält einen stabilen NCO-Wert mit einem NCO-Gehalt von 0,13 % in der PU-Lösung.

1 100 g des Prepolymeren werden durch Zugabe von 0,72 g Isophorondiamin zu 25 % verlängert, wobei die Viskosität von 4 000 mPa.s bei 24 °C direkt auf 12 000 mPa.s bei 46 °C ansteigt. Durch Zugabe von 5,6 g 4-(3-Amino-4-methylbenzyl)-cyclohexylamin wird abgestoppt. Nach Verdünnen mit Tetrahydrofuran auf 20 % Feststoff erhält man eine stabile Lösung mit einer Viskosität von 2 100 mPa.s.

### Beispiel 7

366 g eines 1,4-Dimethylcyclohexanpolycarbonats der OH-Zahl 56,1 werden in 980 g Tetrahydrofuran mit 53,8 g 4,4'-Diisocyanatodiphenylmethan versetzt. Nach 6 Stunden bei 55 °C erhält man ein stabiles Prepolymer mit einem NCO-Gehalt von 0,16 % in der NCO-Lösung.

1 100 g des Prepolymeren werden mit einer Mischung von 0,66 Isophorondiamin und 0,015 g N-Methylethanolamin verlängert, wobei die Viskosität von 4300 mPa.s bei 31 °C schnell auf 16400 mPa.s bei 44 °C ansteigt.

Durch Zugabe von 7,37 g 4-(3-Amino-4-methylbenzyl)-cyclohexylamin wird abgestoppt. Nach Verdünnen mit Tetrahydrofuran auf 20% Feststoffgehalt erhält man eine stabile Lösung der Viskosität 2 800 mPa.s.

### Beispiel 8

265 g 2,2-Bis-(4-(2-hydroxy-ethoxy)-phenyl-propan werden in 980 g Tetrahydrofuran mit 154,7 g eines Gemisches aus 65 % 2,4- und 35 % 2,6-Toluylendiisocyanat versetzt. Nach Zugabe von 0,5 ml einer 1 %igen Dibutylzinndilaurat-Lösung in THF wird die Lösung 28 h auf 50 bis 60 °C erwärmt. Man erhält ein Prepolymer mit einem konstanten NCO-Wert von 0,44 % bezogen auf PU-Lösung.

955 g des Prepolymeren werden mit 6,8 g Isophorondiamin verlängert, wobei die Viskosität von 500 mPa.s bei 21 °C direkt auf 18 000 mPa.s bei 29 °C ansteigt.

Mit 4,36 g 4-(3-Amino-4-methylbenzyl)-cyclohexylamin wird abgestoppt. Man erhält nach Verdünnen mit THF auf 20 % Feststoff eine stabile Lösung der Viskosität 3 000 mPa.s.

### Beispiel 9

331 g eines Hexandiolpolycarbonats der OH-Zahl 160 werden bei 60 °C mit 89,2 g einer Mischung von 65 % 2,4- und 35 % 2,6-Toluylendiisocyanat in 180 g Ethylacetat zur Reaktion gebracht. Man erhält ein Prepolymer mit einem stabilen NCO-Wert von 0,45 %. Das Prepolymer wird mit 14,0 g 4-(3-Amino-4-methylbenzyl)-cyclohexylamin abgestoppt und auf 50 % Feststoff verdünnt. Man erhält eine stabile Lösung der Viskosität 2500 mPa.s.

### Beispiel 10

116,8 eines Hexandiolpolycarbonats der OH-Zahl 56 in 980 g Tehydrofuran werden bei 50° mit 216,7 g eines Gemisches aus 65 % 2,4- und 35 % 2,6-Toluylendiisocyanat vermischt. Nach Zugabe von 12,5 ppm (bezogen auf Polyether) Dibutylzinndilaurat werden 30 Minuten nachgerührt. Anschließend werden eine Mischung von 51,23 g Butandiol-1,4 und 35,3 g Ethylenglykol eingetropft. Nach 30 Stunden bei 55-60 °C erhält man einen konstanten NCO-Wert von 0,17 %. 1 100 g des Prepolymeren werden zu 75 % d. Th. mit Isophorondiamin verlängert wobei die Viskosität von 1 000 mPas bei 24 °C auf 16.000 mPas bei 31 °C ansteigt. Durch Angabe von 2,21 g 4-(3-Amino-4-Methylbenzyl)-cyclohexylamin wird abgestoppt. Nach Verdünnen mit THF hat die Lösung eine Viskosität von 2760 mPas.

### Beispiel 11

292 g eines Hexandiol-polycarbonats der OH-Zahl 105,8 in 980 g Tetrahydrofuran werden bei 5₀ °C mit 115,7 g 4,4'-Diisocyanatodiphenylmethan gemischt. Nach 30 Minuten werden 8,12 g Hexandiol-1,6 und 4,27 g Ethylenglycol als Mischung eingetropft. Nach 6 Stunden bei 50-55 °C erhält man einen konstanten NCO-Wert von 0,17 %. 1 100 g des Prepolymeren werden zu 10 % d. Th. mit Isophorondiamin verlängert, wobei die Viskosität von 6 800 mPas bei 24 °C auf 16.000 mPas bei 44 °C ansteigt. Durch Zugabe von 8,75 g 4-(3-Amino-4-methylbenzyl)-cyclohexylamin wird abgestoppt. Nach Verdünnen mit THF auf einen Feststoffgehalt von 20 % besitzt die Lösung eine Viskosität von 2 800 mPas.

Die Lösungen wurden mit Wasser versetzt, so daß ein Wassergehalt von 0,5 % resultierte und auf 100 g 20 %ige Polymerlösung wurden 5 eines Polyisocyanates (Desmodur L-75 der Bayer AG) eingerührt.

Mit einem 1 000 µm-Rakel wurden Filme auf Glasplatten gezogen. Die Filme wurden nach einer Woche Lagern unter Normalbedingungen vermessen.

Zur Bestimmung des Vernetzungsgrades wurden gewogene Filmstücke eine Stunde in THF gelagert und die Volumenquellung bestimmt und anschließend getrocknet und die Gewichtsänderung festgestellt. Die Werte sind in der nachfolgenden Tabelle aufgeführt.

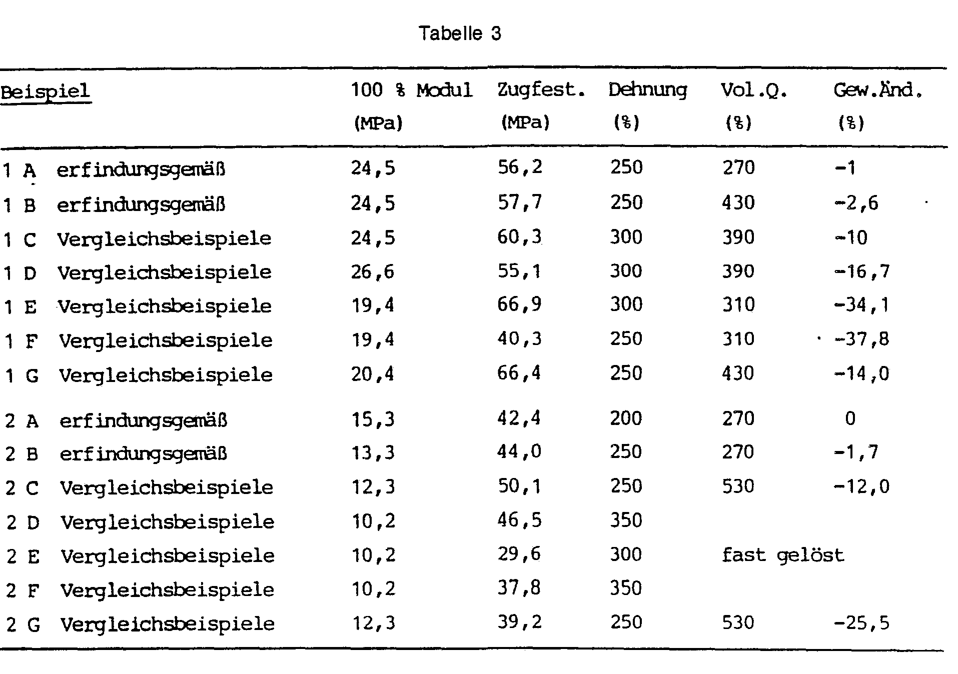

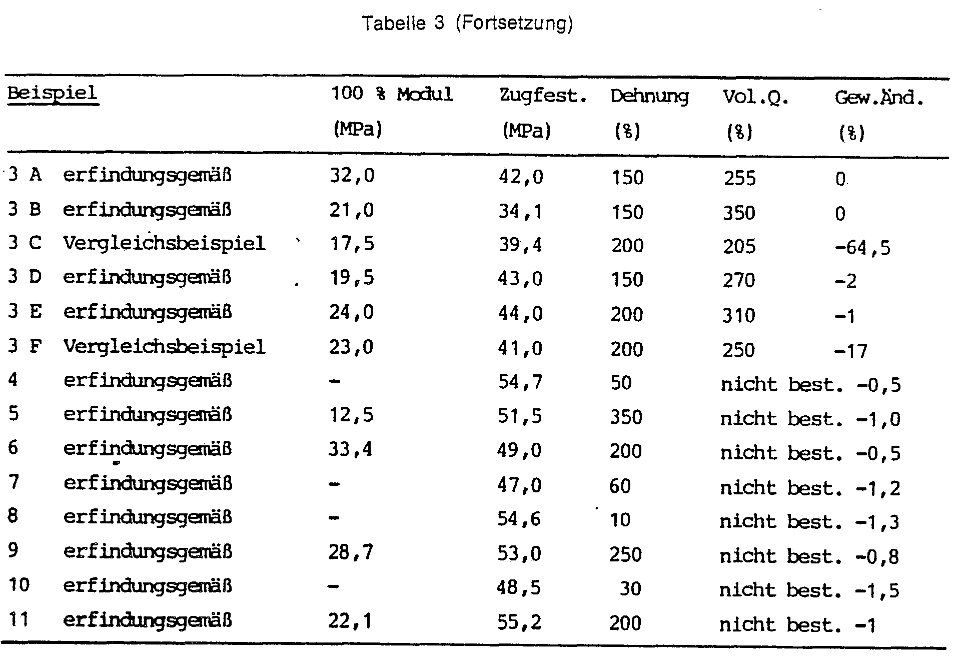

## Patentansprüche

1. Verfahren zur Herstellung von vernetzungsfähigen, überwiegend linearen Polyurethanen mit gegenüber NCO reaktiven Endgruppen, aus
A) organischen, im wesentlichen difunktionellen Polyisocyanaten,
B) höhermolekularen, im wesentlichen difunktionellen Polyhydroxylverbindungen mit Molekulargewichten von 400 bis 6 000 und/oder
C) im wesentlichen difunktionellen, gegebenenfalls unterschiedlichen Kettenverlängerunsmitteln mit Molekulargewichten von 18 bis 399, und
D) Kettenabbruchsmitteln mit gegenüber NCO-Gruppen unterschiedlich reaktiven Wasserstoffatomen, in
E) im wesentlichen inerten Lösungsmitteln für die Reaktionsteilnehmer, in ein- oder mehrstufiger Umsetzung der Komponenten, dadurch gekennzeichnet, daß man die Komponenten A) mit den Komponenten B) und/oder C) in einem NCO/reaktive H-Atome - Verhältnis von 1,45: 1 bis 1,02: 1, vorzugsweise 1,15: 1 bis 1.02: 1 zu einem noch endständige NCO-Gruppen aufweisenden Polyurethan mit einem Molekulargewicht von mindestens 10000 und einem NCO-Gehalt von ≤ 0,2 Äquivalenten und ≥ 0,001 Äquivalenten NCO/.1 000 g Polyurethan umsetzt und anschließend mit Diaminen mit unterschiedlich reaktiven Aminogruppen als Kettenabbruchsmittel D), ausgewählt aus der Reihe von araliphatischen Diaminen und/oder aromatischen Diaminen in einem NCO-NH₂-Verhältnis von 1 : 5 bis 1 : 1,66 zu Polyurethanen mit aromatischen Aminoendgruppen umsetzt.

2. Verfahren nach Anspruch 1, dadurch gekennzeichnet, daß man mit araliphatischen Polyaminen der Formel I und/oder II 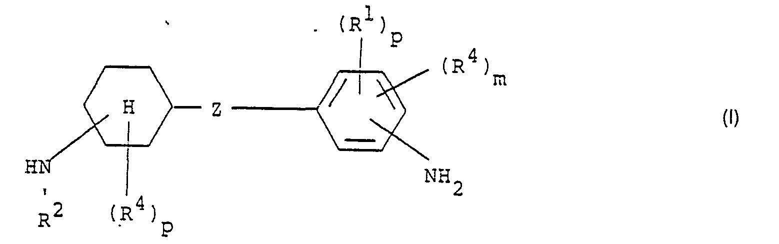 wobei Z =

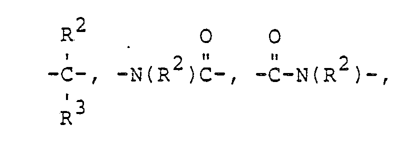

(-S)ₘ, -S0_{z}-, -0-, bevorzugt Z = ―CH₂― und ―C(CH₃)₂―

R¹ gegebenenfalls verzweigtes C₁-C₁₃-Alkyl, 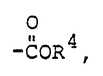 Halogen;

R² H, gegebenenfalls verzweigtes C₁-C₈-Alkyl,

R³ H, aryl, gegebenenfalls verzweigtes C₁-C₆-Alkyl,

R⁴ gegebenenfalls verzweigtes C₁-C₆-Alkyl,

m 0, 1, 2 oder 3,

p 0 oder 1 wobei für Formel (I) gilt: (m + p) = 0, 1, 2, 3 oder 4 ; und/oder 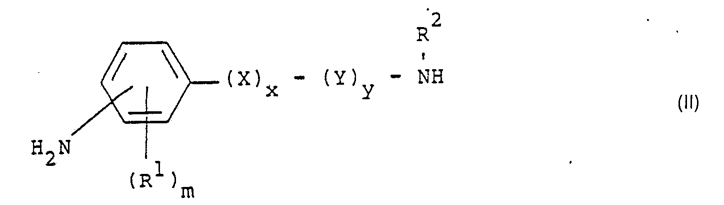 wobei
X ―CH₂―CH₂―CH₂―, -NH-, (dabei muß y≠ Null sein), -NR⁴⁻, (dabei muß y ≠ Null sein) ―O―. (dabei muß y ≠ Null sein), -S-, (dabei muß y ≠ Null sein).
x 0 oder 1,
Y 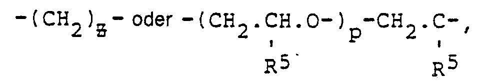 wobei
Z = Null oder ganze Zahlen von 1 bis 6,
p = Null oder ganze Zahlen von 1 bis 6,
y 0 oder 1 und
R⁵ H oder Methyl bedeutet und die übrigen Substituenten die in Formel I angegeben Bedeutung haben, als Kettenabbruchsmittel D) umsetzt.

3. Verfahren nach Ansprüchen 1 und 2 dadurch gekennzeichnet, daß man mit'araliphatischen Diaminen der Formel V : 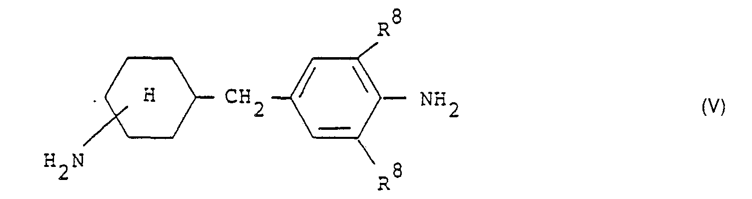 wobei R⁸, gleich oder verschieden, eine lineare oder gegebenenfalls verzweigte Alkylgruppe mit 1 bis 4 C-Atomen bedeutet, als Kettenabbruchsmittel D) umsetzt.

4. Verfahren nach Anspruch 1, dadurch gekennzeichnet, daß man mit aromatischen Diaminen mit unterschiedlich reaktiven Aminogruppen der Formel VI 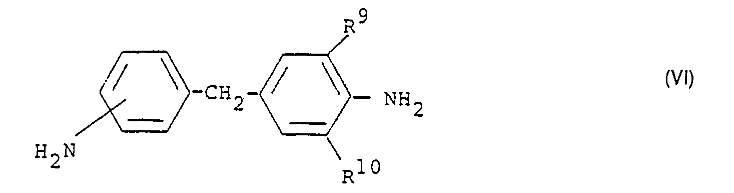 wobei

R⁹ lineare oder gegebenenfalls verzweigte Alkylgruppen mit 1 bis 4 C-Atomen, ―CO₂R₄, wobei R⁴ die in Anspruch 2 angegebene Bedeutung hat, und

R¹⁰ lineare oder gegebenenfalls verzweigte Alkylgruppen mit 1 bis 4 C-Atomen oder Halogen sind, als Kettenabbruchsmittel D) umsetzt.

5. Leicht vernetzbare Polyurethane erhältlich nach Ansprüchen 1-4 und gekennzeichnet durch einen Gehalt an endständigen aromatischen Aminogruppen von ≤ 0,2 Äquivalenten endständiges aromatisches NH₂ pro 1 000 g Polyurethan, bevorzugt < 0,1 Äquivalenten und besonders bevorzugt < 0,033 Äquivalenten und einen Mindestgehalt von 0,001 Äquivalenten.

6. Verwendung der nach Ansprüchen 1-4 erhaltenen Polyurethane als Komponente in 2-Komponenten Polyurethan- Klebstoff-, Textil- oder Lederbeschichtungs-Zubereitungen.

## Claims

1. A process for the production of crosslinkable, predominantly linear polyurethanes containing NCO-reactive terminal groups from
A) organic, substantially difunctional polyisocyanates,
B) relatively high molecular weight, substantially difunctional polyhydroxyl compounds having molecular weights of from 400 to 6 000 and/or
C) substantially difunctional, optionally different chain-extending agents having molecular weights of from 18 to 399 and
D) chain-terminating agents containing hydrogen atoms showing different reactivity to NCO-groups, in
E) solvents which are substantially inert to the reactants, in a single-stage or multistage reaction, characterized in that components A) are reacted with components B) and/or C) in an NCO : reactive H-atom ratio of from 1.45 : 1 to 1.02 : 1, preferably from 1.15 : 1 to 1.02 : 1, to form a polyurethane still containing terminal NCO-groups and having a molecular weight of at least 10,000 and an NCO-content of ≤ 0.2 equivalents and . 0.001 equivalents of NCO/1 000 g of polyurethane and are subsequently reacted with diamines containing amino groups of different reactivity selected from the group comprising araliphatic diamines and/or aromatic diamines as chain-terminating agents D) in an NCO : NH₂- ratio of from 1 : 5 to 1 : 1.66 to form polyurethanes containing terminal aromatic amino groups:

2. A process as claimed in claim 1, characterized in that araliphatic polyamines corresponding to formula (e) I and/or II below 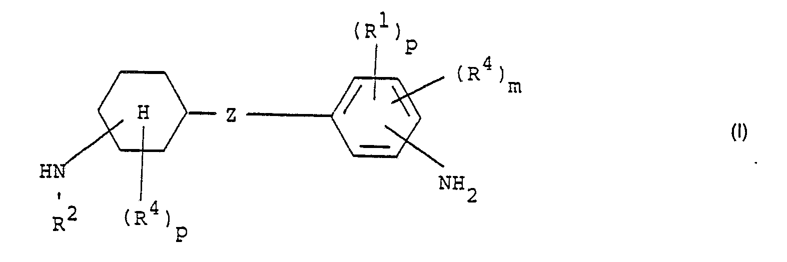 in which
Z represents 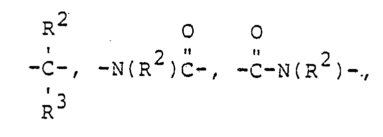
_{(-S)m} ―SO₂―. ₋₀₋ preferably -_{C}H₂- and -C(CH₃)₂-,
R' represents optionally branched C₁-C₁₃-alkyl, 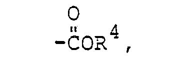 halogen;
R² represents H, optionally branched C₁-C₆-alkyl,
R³ represents H, aryl, optionally branched C₁-C₆-alkyl,
R⁴ represents optionally branched C₁-C₆-alkyl,
m = 0, 1, 2 or 3,
p = 0 or 1 and
(m + p) = 0, 1, 2, 3 or 4 ; 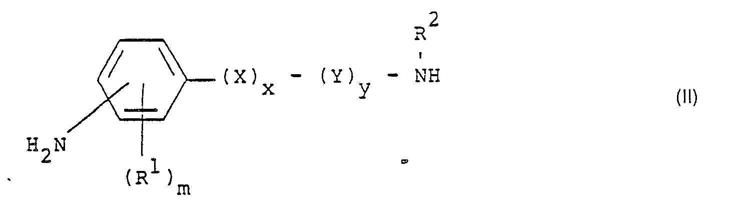 in which
X represents ―CH₂―CH₂―CH₂― -NH- (in which case y must ≠ zero)
NR⁴⁻ (in which case y must ≠ zero), -0- (in which case y must ≠ zero), -S- (in which case y must ≠ zero),
x = 0 or 1,
Y represents 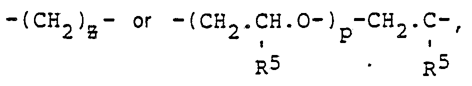 where
z = zero or an integer of from 1 to 6,
p = zero or an integer of from 1 to 6,
y = 0 or 1 and
R⁵ represents H or methyl, the other substituents having the same meanings as in formula I, are used as the chain-terminating agents D).

3. A process as claimed in claims 1 and 2, characterized in that araliphatic diamines corresponding to the following formula 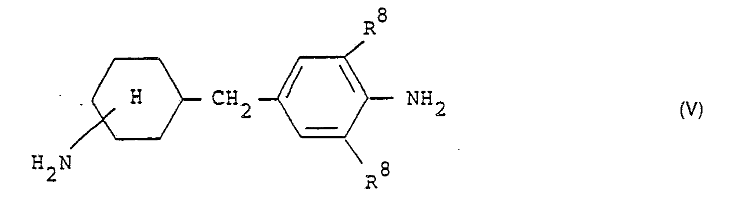 in which R⁸ may be the same or different and represent a linear or optionally branched alkyl group containing from 1 to 4 carbon atoms, are used as the chain-terminating agents D).

4. A process as claimed in claim 1, characterized in that aromatic diamines (containing amino groups of different reactivity) corresponding to the following formula 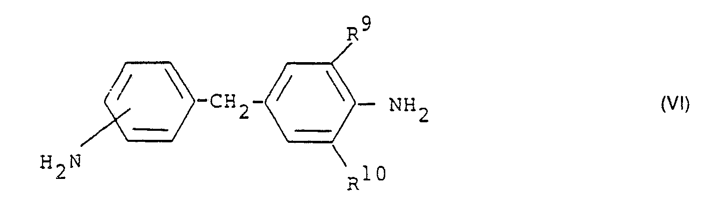 in which

R⁹ represents linear or optionally branched alkyl groups containing from 1 to 4 carbon atoms, ―CO₂R⁴ where R⁴ is as defined in claim 2, and

R¹⁰ represents linear or optionally branched alkyl groups containing from 1 to 4 carbon atoms or halogen, are used as the chain-terminating agents D).

5. Readily crosslinkable polyurethanes obtainable by the process claimed in claims 1 to 4, characterized in that they contain terminal aromatic amino groups in a quantity of ≤ 0.2 equivalents, preferably in a quantity of ≤ 0.1 equivalent, more preferably in a quantity of ≤ 0.033 equivalents and at least in a quantity of 0.001 equivalents per 1 000 g of polyurethane solids.

6. The use of the polyurethanes obtained by the process claimed in claims 1 to 4 as component in two-component polyurethane adhesive textile- or leather-coating preparations.

## Revendications

1. Procédé de préparation de polyuréthannes principalement linéaires, réticulables, à groupes terminaux réactifs avec les groupes NCO, à. partir de
A) des polyisocyanates organiques essentiellement difonctionels,
B) des composés polyhydroxylés à haut poids moléculaire, essentiellement difonctionnels, à des poids moléculaires de 400 à 6 000, et/ou
C) des agents d'allongement des chaînes essentiellement difonctionnels, éventuellement différents, de poids moléculaire 18 à 399, et
D) des agents de coupure des chaînes portant des atomes d'hydrogène à réactivité différente à l'égard des groupes NCO, dans
E) des solvants essentiellement inertes des composants de la réaction, dans une réaction des composants en un ou plusieurs stades opératoires, caractérisé en ce que l'on fait réagir les composants A) avec les composants B) et/ou C) à un rapport NCO/atomes d'hydrogène réactifs de 1,45 : 1 à 1,02 : 1, de préférence de 1,15 : 1 à 1,02 : 1 avec formation d'un poids polyuréthanne portant encore des groupes NCO terminaux, d'un poids moléculaire de 10 000 au moins, à une teneur en NCO ≤ à 0,2 équivalent et ≥ à 0,001 équivalent de NCO pour 1 000 g de polyuréthanne puis on fait réagir avec des diamines à groupes amino à réactivité différente servant d'agents de coupure des chaînes D), choisies dans la classe des diamines araliphatiques et/ou des diamines aromatiques à un rapport NCO/NH₂ de 1 : 5 à 1 : 1,66, avec formation d'un polyuréthanne à groupes terminaux amino aromatiques.

2. Procédé selon la revendication 1, caractérisé en ce que l'on fait réagir avec des agents de coupure des chaînes D) consistant en polyamines araliphatiques de formules I et/ou Il 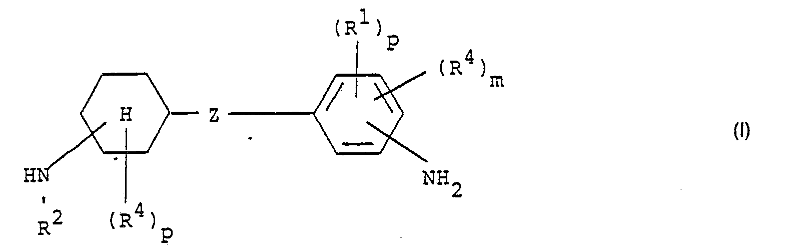 dans laquelle
Z= 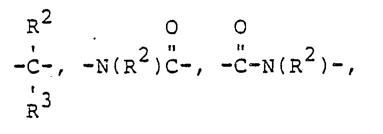
(-S)ₘ, -SO₂-, -0-, de préférence Z = -CH₂- et ―G(CH₃)₂―,
R' représente un groupe alkyle en C₂-C₁₃, éventuellement ramifié, 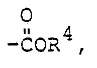 un halogène;
R² = H, alkyle en C₁-C₆, éventuellement ramifié,
R³ = H, un groupe aryle, alkyle en C₂-C₆, éventuellement ramifié,
R⁴ = groupe alkyle en C₁-C₆, éventuellement ramifié,
m = 0, 1, 2 ou 3,
p = 0 ou 1 et,
en référence à la formule (I) (m + p) = 0, 1, 2, 3 ou 4 ;
et/ou 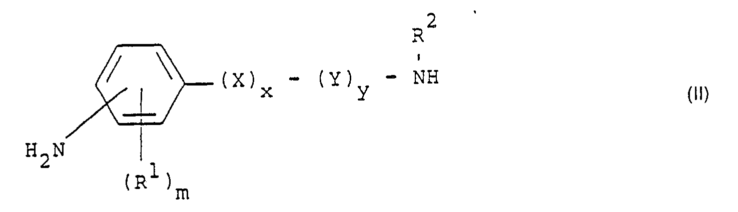 dans laquelle
X = ―CH₂―CH₂―CH₂―, -NH-, (y doit alors être différent de zéro), -NR⁴⁻, (y doit alors être différent de zéro), -0-, (y doit alors être différent de zéro), -S-, (y doit alors être différent de zéro)
x = 0 ou 1,
Y = 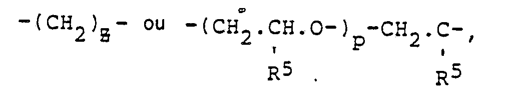 avec
z = 0 ou nombre entier de 1 à 6,
p = 0 ou nombre entier de 1 à 6,
y = 0 ou 1 et
R⁵ = H ou méthyle et les autres symboles ont les significations indiquées en référence à la formule (I).

3. Procédé selon les revendications 1 et 2, caractérisé en ce que l'on fait réagir avec des agents de coupure des chaînes D) consistant en diamines araliphatiques de formule V : 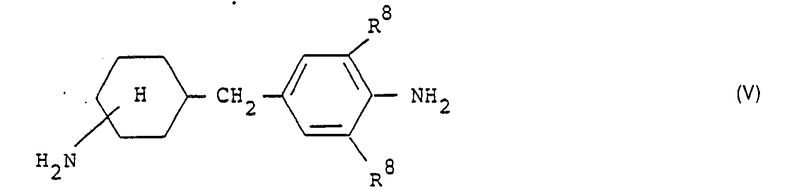 dans laquelle les symboles R⁸ ayant des significations identiques ou différentes, représentent chacun un groupe alkyle en C₁-C₄ linéaire ou éventuellement ramifié.

4. Procédé selon la revendication 1, caractérisé en ce que l'on fait réagir avec des agents de coupure des chaînes D) consistant en diamines aromatiques à groupes amino à réactivité différente répondant à la formule VI 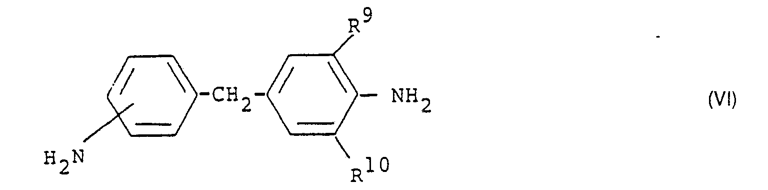 dans laquelle ,
R⁹ représente un groupe alkyle en C₁-C₄ linéaire ou éventuellement ramifié, un groupé―CO₂R⁴, dans lequel R⁴ a la signification indiquée dans la revendication 2 et
R¹⁰ représente un groupe alkyle linéaire ou éventuellement ramifié en C₁-C₄ ou un halogène.

5. Polyuréthannes faciles à réticuler obtenus selon les revendications 1 à 4 et caractérisés en ce qu'ils contiennent des groupes amino aromatiques terminaux à une teneur ≤ 0,2 équivalent de NH₂ aromatique terminal pour 1 000 g de polyuréthanne, de préférence à une teneur 0,1 équivalent et mieux encore ≤ 0,033 équivalent, avec une teneur minimale de 0,001 équivalent.

6. Utilisation des polyuréthannes obtenus selon les revendications 1 à 4 en tant que composant de compositions de polyuréthannes, d'adhésifs, de compositions de revêtement de textiles ou de cuirs.
